# EUROPEAN PATENT APPLICATION

(11) **EP 2 573 659 A2**
(43) Date of publication of application: **27.03.2013**
(21) Application number: 12158518.6
(22) Date of filing: 08.03.2012
(51) Int. Cl.: G06F 3/041, G06F 3/042

(54) **Display apparatus, and touch sensing apparatus and method**

(30) Priority: 21.09.2011 KR 20110095217
(71) Applicant: Samsung Electronics Co., Ltd., Suwon-si, Gyeonggi-do, 443-742 (KR)
(72) Inventor: You, Kwang-hoon, Gyeonggi-do (KR)
(74) Representative: Davies, Robert Ean

(57) **Abstract**

A display apparatus is provided. The display apparatus includes a display unit which displays an image; a sensing unit which generates an IR scan image of a surface of the display unit; an image processing unit which detects touched areas that are touched by a user from the IR scan image, detects an unintentional touched area, from among the touched areas, that has an unintentional touch pattern, and removes the unintentional touched area from the IR scan image; and a control unit which processes an event corresponding to a remaining touched area from among the touched areas.

## Description

### CROSS-REFERENCE TO RELATED APPLICATION

This application claims priority from Korean Patent Application No. 10-2011-0095217, filed on September 21, 2011, in the Korean Intellectual Property Office, the disclosure of which is incorporated herein by reference in its entirety.

### BACKGROUND

### 1. Field

Apparatuses and methods consistent with exemplary embodiments relate to providing a display apparatus, a touch sensing apparatus and a touch sensing method, and more particularly, to providing a display apparatus, a touch sensing apparatus and a method which are capable of improving the precision of infrared (IR)-based touch sensing.

### 2. Description of the Related Art

Display apparatuses are devices that process various digital or analog image signals received from external sources or various image signals stored in their internal storage devices in various formats, and display the processed image signals. Examples of the digital or analog image signals include a typical broadcast signal, a digital satellite broadcast signal, and an image signal provided by an external device (for example, a set-top box, a disk player, a mobile device, a personal computer (PC), or the like) or an internet protocol (IP)-based server.

An increasing number of display apparatuses have been equipped with touch screens for the purpose of improving user convenience. Touch screens are largely classified into resistive touch screens, capacitive touch screens, infrared (IR) touch screens, and ultrasonic touch screens.

IR touch screens emit IR light toward the top of a display panel, and detect a touch location by detecting IR light reflected from the hand of a user. IR touch screens have been widely employed in various electronic devices such as, for example, large-scale televisions (TVs).

However, IR touch screens may often detect a touch pattern unintentionally or mistakenly made by a user as a legitimate touch pattern. For example, not only an area on a display panel touched by the fingers but also an area on the display panel mistakenly touched by the arm or the palm of the hand may be detected as a legitimate touch pattern. This problem may become more prevalent especially when an IR touch screen is applied to a large-scale display apparatus.

Therefore, a method is needed to selectively detect only a touch pattern intended by a user.

### SUMMARY

Exemplary embodiments address at least the above problems and/or disadvantages and other disadvantages not described above. Also, the exemplary embodiments are not required to overcome the disadvantages described above, and an exemplary embodiment may not overcome any of the problems described above.

Exemplary embodiments provide a display apparatus, a touch sensing apparatus and a touch sensing method which are capable of improving the precision of infrared (IR)-based touch sensing.

According to an exemplary aspect of an exemplary embodiment, there is provided a display apparatus including: a display unit which displays an image; a sensing unit which generates an IR scan image of a surface of the display unit; an image processing unit which detects touched areas that are touched by a user from the IR scan image, detects an unintentional touched area from among the touched areas that has an unintentional touch pattern, and removes the unintentional touched area from the IR scan image; and a control unit which processes an event corresponding to a remaining touched area from among the touched areas.

The sensing unit may include: an IR source unit which emits IR light toward the surface of the display unit; and an IR sensing unit which generates the IR scan image by sensing IR light reflected in response to the user touching on the surface of the display unit.

The image processing unit may detect two or more areas touched by the user.

The image processing unit may identify a touch pattern having a predefined shape or a touch pattern having irregular intervals between elements thereof as the unintentional touch pattern.

The display apparatus may also include: a down-scaling unit which down-scales the IR scan image, wherein the image processing unit detects the touched areas from the down-scaled IR scan image, detects the unintentional touched area from among the touched areas that has the unintentional touch pattern, and removes the unintentional touched area from the down-scaled IR scan image.

The image processing unit may include: a background removal filtering unit which removes a background portion from the IR scan image; a high-pass filtering unit which performs high-pass filtering on the background-removed IR scan image; a scaler filtering unit which performs scaler filtering on the high-pass-filtered IR scan image; a rectification filtering unit which performs rectification filtering on the scaler-filtered IR scan image; a pattern filtering unit which detects the unintentional touched area from among the touched areas that has the unintentional touch pattern from the rectification-filtered IR scan image, and removes the unintentional touched area from the rectification-filtered IR scan image; and an extraction unit which extracts the remaining touched area from the pattern-removed IR scan image.

The image processing unit may include an input unit which receives the IR scan image using a high-definition multimedia interface (HDMI) communication method.

The image processing unit may also include an output unit which outputs the touched areas to the control unit using a universal serial bus (USB)-based method.

The sensing unit may generate a plurality of IR scan images of the surface of the display unit in series at a predefined frame rate, the image processing unit may also include an encoding unit which encodes the plurality of IR scan images using a predefined compression method, and the output unit transmits the encoded IR scan images to the control unit.

The image processing unit may also include a conversion unit which converts the plurality of IR scan images to a predefined frame rate, and the encoding unit may encode the frame rate-converted IR scan images using the predefined compression method.

According to another exemplary aspect of an exemplary embodiment, there is provided a touch sensing method including: generating an IR scan image of a surface of a display unit; detecting touched areas that are touched by a user from the IR scan image; detecting an unintentional touched area from among the touched areas that has an unintentional touch pattern; removing the unintentional touched area from the IR scan image; and processing an event corresponding to a remaining touched area from among the touched areas.

The generating the IR scan image may include: emitting IR light toward the surface of the display unit; and generating the IR scan image by sensing IR light reflected in response to the user touching on the surface of the display unit.

The detecting may include detecting two or more areas touched by the user.

The detecting may include detecting the touched areas by removing a touch pattern having a predefined shape and/or a touch pattern having irregular intervals between elements thereof from the IR scan image.

The detecting may include: removing a background portion from the IR scan image; performing high-pass filtering on the background-removed IR scan image; performing scaler filtering on the high-pass-filtered IR scan image; performing rectification filtering on the scaler-filtered IR scan image; removing the unintentional touched area from the rectification-filtered IR scan image; and extracting the remaining touched area from the pattern-removed IR scan image.

The touch sensing method may also include: down-scaling the IR scan image; detecting the touched areas from the down-scaled IR scan image; detecting the unintentional touched area from among the touched areas that has the unintentional touch pattern; and removing the unintentional touched area from the down-scaled IR scan image.

The generating the IR scan image may include generating a plurality of IR scan images of the surface of the display unit in series at a predefined frame rate, and the touch sensing method may also include: encoding the plurality of IR scan images using a predefined compression method; and outputting the encoded IR scan images.

According to an exemplary aspect of an exemplary embodiment, there is provided a touch sensing apparatus including: an input unit which receives an IR scan image of a surface of the display unit; an image processing unit which detects a plurality of touched areas that are touched by a user from the IR scan image, detects an unintentional touched area from among the plurality of touched areas that has an unintentional touch pattern, and removes the unintentional touched area from the IR scan image; and an output unit which outputs remaining touched areas from among the plurality of touched areas.

The image processing unit may identify a touch pattern having a predefined shape or a touch pattern having irregular intervals between elements thereof as the unintentional touch pattern.

The image processing unit may include: a background removal filtering unit which removes a background portion from the IR scan image; a high-pass filtering unit which performs high-pass filtering on the background-removed IR scan image; a scaler filtering unit which performs scaler filtering on the high-pass-filtered IR scan image; a rectification filtering unit which performs rectification filtering on the scaler-filtered IR scan image; a pattern filtering unit which detects the unintentional touched area from among the plurality of touched areas that has the unintentional touch pattern from the rectification-filtered IR scan image, and removes the unintentional touched area from the rectification-filtered IR scan image; an extraction unit which extracts the remaining touched area from the pattern-removed IR scan image.

According to the present invention there is provided an apparatus and method as set forth in the appended claims. Other features of the invention will be apparent from the dependent claims, and the description which follows.

### BRIEF DESCRIPTION OF THE DRAWINGS

For a better understanding of the invention, and to show how embodiments of the same may be carried into effect, reference will now be made, by way of example, to the accompanying diagrammatic drawings in which:
FIG. 1 is a block diagram of a display apparatus according to an exemplary embodiment;
FIG. 2 is a block diagram of a user interface unit illustrated in FIG. 1 according to an exemplary embodiment;
FIG. 3 is a block diagram of an image processing unit illustrated in FIG. 2 according to an exemplary embodiment;
FIG. 4 is a block diagram of a touch sensing apparatus according to an exemplary embodiment;
FIG. 5 is a diagram illustrating an example of the shape of a sensing unit illustrated in FIG. 2;
FIGS. 6A to 6F are diagrams illustrating an example of the operation of an image processing unit illustrated in FIG. 2; and
FIG. 7 is a flowchart illustrating a touch sensing method according to an exemplary embodiment.

### DETAILED DESCRIPTION

Certain exemplary embodiments will now be described in greater detail with reference to the accompanying drawings.

In the following description, the same drawing reference numerals are used for the same elements even in different drawings. The matters defined in the description, such as detailed construction and elements, are provided to assist in a comprehensive understanding of the invention. Thus, it is apparent that the present invention can be carried out without those specifically defined matters. Also, well-known functions or constructions are not described in detail since they would obscure the invention with unnecessary detail. The term "unit" as used herein means a hardware component, such as a processor or circuit, and/or a software component that is executed by a hardware component such as a processor.

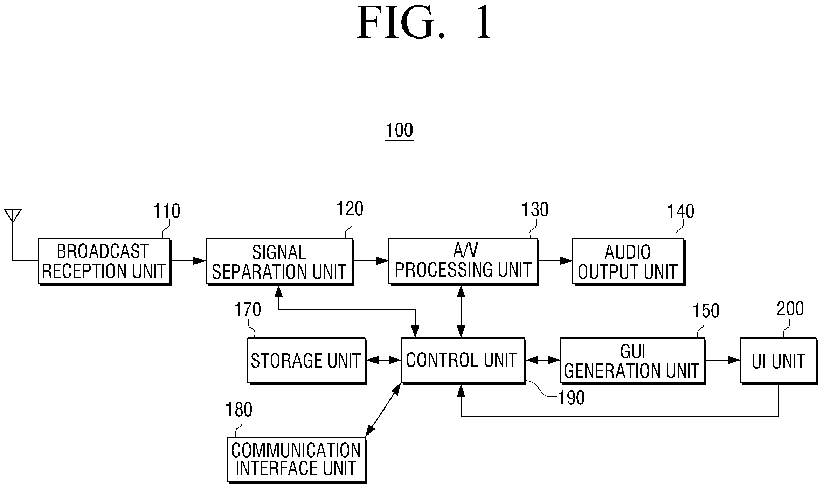

FIG. 1 is a block diagram of a display apparatus (for example, a digital television (TV)) according to an exemplary embodiment.

Referring to FIG. 1, a display apparatus 100 includes a broadcast reception unit 110, a signal separation unit 120, an audio/video (A/V) processing unit 130, an audio output unit 140, a graphic user interface (GUI) generation unit 150, a storage unit 170, a communication interface unit 180, a control unit 190, and a user interface (UI) unit 200.

The broadcast reception unit 110 may receive a broadcast signal wirelessly or by wire from a broadcasting station or a satellite, and may demodulate the received broadcast signal.

The signal separation unit 120 may separate the received broadcast signal into a video signal, an audio signal, and an additional information signal. The signal separation unit 120 may transmit the video signal and the audio signal to the A/V processing unit 130.

The A/V processing unit 130 may be provided with a video signal and an audio signal by the broadcast reception unit 110 and the storage unit 170, may perform signal processing such as, for example, video decoding, video scaling, audio decoding, or the like, on the video signal and the audio signal, and may output the video signal and the audio signal to the GUI generation unit 150 and the audio output unit 140, respectively.

To store a video signal and an audio signal in the storage unit 170, the A/V processing unit 130 may compress the video signal and the audio signal, and may output the compressed video and audio signal to the storage unit 170.

The audio output unit 140 may convert an audio signal that is output by the A/V processing unit 130 into a sound signal, and may output the sound signal as sound via a speaker (not shown) or to an external device via an external output port (not shown).

The GUI generation unit 150 may generate a GUI, and may provide the GUI to a user. The GUI generation unit 150 may add the GUI to an image output by the A/V processing unit 130. The GUI generation unit 150 may provide the image with the GUI added thereto to the UI unit 200.

The storage unit 170 may store video content. For example, the storage unit 170 may receive video content into which video data and audio data are compressed from the A/V processing unit 130, may store the video content, and may output the video content to the A/V processing unit 130 under the control of the control unit 190. For example, the storage unit 170 may be implemented as a hard disk, a nonvolatile memory, a volatile memory, or the like.

The UI unit 200 may display various information provided by the display apparatus 100 and an image provided by the GUI generation unit 150.

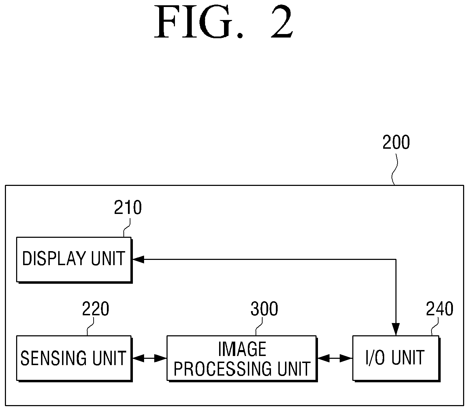

The UI unit 200 may receive settings or selections that are made by the user in connection with various functions supported by the display apparatus 100. For example, the UI unit 200 may detect one or more areas touched by the user using an infrared (IR)-based method, and may transmit the results of the sensing to the control unit 190. The structure and the operation of the UI unit 200 will be described later with reference to FIG. 2. In the example illustrated in FIG. 1, the user input unit 200 receives a control command from the user using a touch-based method. In another non-limiting example, the UI unit 200 may be equipped with a key button for allowing the user to enter a control command.

The communication interface unit 180 may be provided to connect the display apparatus 100 to an external device (not shown). For example, the communication interface unit 180 may connect the display apparatus 100 and the external device via a local area network, the Internet, or a universal serial bus (USB) port.

The control unit 190 may control the general operation of the display apparatus 100. The control unit 190 may process an event relevant to one or more touched areas detected by the UI unit 200. For example, in response to the user touching a predetermined area on the display apparatus 100 while surfing on the Internet with the display apparatus 100, the control unit 190 may process an event of displaying a webpage corresponding to the touched areas.

As described above, since the display apparatus 100 receives a control command from the user using a touch-based method, it is possible for the user to intuitively control the display apparatus 100. In addition, it is possible to improve the precision of touch sensing by removing any unintentional touch pattern made by the user.

The example illustrated in FIG. 1 has been described, taking as an example a display apparatus that receives and displays a broadcast signal. However, the present invention can be applied to nearly all types of electronic devices as long as they are equipped with display panels.

FIG. 2 is a block diagram of the UI unit 200 according to an exemplary embodiment.

Referring to FIG. 2, the UI unit 200 includes a display unit 210, a sensing unit 220, an image processing unit 300, and an input/output (I/O) unit 240.

The display unit 210 may display an image provided by the GUI generation unit 150. For example, the display unit 210 may be implemented as a liquid crystal display (LCD), a light-emitting diode (LED), an active matrix organic LED (AMOLED), a cathode-ray tube (CRT), or the like.

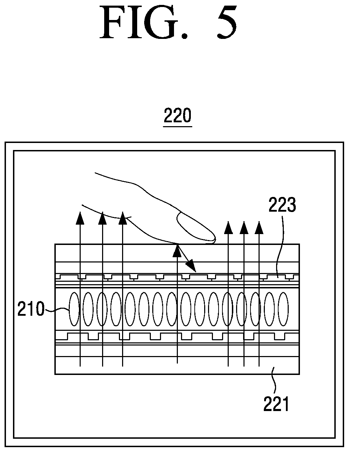

The sensing unit 220 may generate an IR scan image of the surface of the display unit 210. For example, the sensing unit 220 may continue to generate an IR scan image at intervals of a predefined frame rate of, for example, 60 fps. The structure of the sensing unit 220 will be described later with reference to FIG. 5. In the example illustrated in FIG. 2, the display unit 210 and the sensing unit 220 are separate elements of the UI unit 200. In another example, the display unit 210 and the sensing unit 220 may be incorporated into a single unit (for example, a touch screen panel) that performs both the functions of the display unit 210 and the functions of the sensing unit 220.

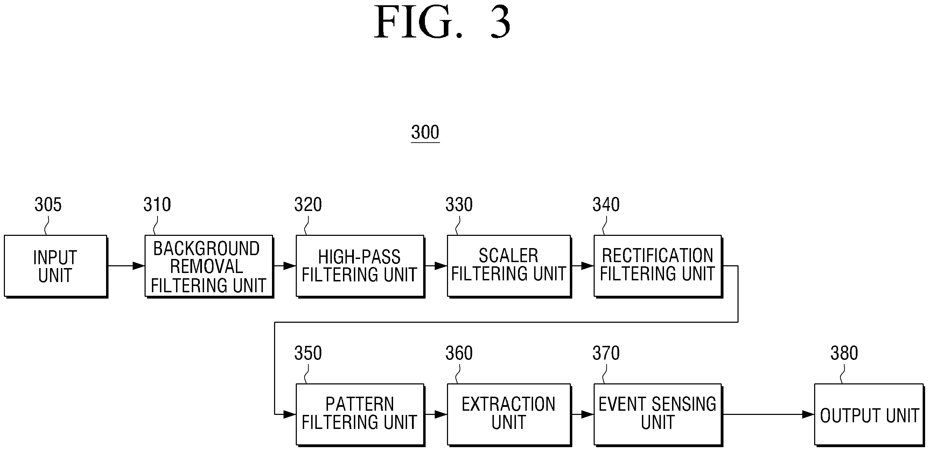

The image processing unit 300 may detect one or more areas touched by the user and remove one or more of those touched areas which have a predefined touch pattern from an IR scan image. For example, the image processing unit 300 may receive an IR scan image generated by the sensing unit 220, and may detect the touched areas from the received IR scan image by removing a predefined touch pattern such as a touch pattern not having a predefined shape such as a circular or oval shape (for example, a touch pattern having a rectangular or diamond shape), a touch pattern having a size larger than that of the fingers, or a touch pattern having irregular intervals between elements thereof from the received IR scan image (e.g., a touch pattern that is more than a predetermined distance or interval apart from a touch pattern intentionally made by the user). The image processing unit 300 may encode one or more IR scan images input thereto in series. The structure of the image processing unit 300 will be described later with reference to FIG. 3.

The I/O unit 240 may receive an image from the GUI generation unit 150, and may transmit the received image to the display unit 210. In another example, the GUI generation unit 150 may transmit an image directly to the display unit 210.

The I/O unit 240 may transmit one or more detected touched areas to the control unit 190. For example, the I/O unit 240 may transmit information on one or more touched areas detected by the image processing unit 300 to the control unit 190.

The I/O unit 240 may transmit encoded data generated by the image processing unit 300 to the control unit 190.

FIG. 3 is a block diagram of the image processing unit 300 according to an exemplary embodiment.

Referring to FIG. 3, the image processing unit 300 includes an input unit 305, a background removal filtering unit 310, a high-pass filtering unit 320, a scaler filtering unit 330, a rectification filtering unit 340, a pattern filtering unit 350, an extraction unit 360, an event sensing unit 370, and an output unit 380. The image processing unit 300 may be implemented as a single chip such as, for example, a field-programmable gate array (FPGA).

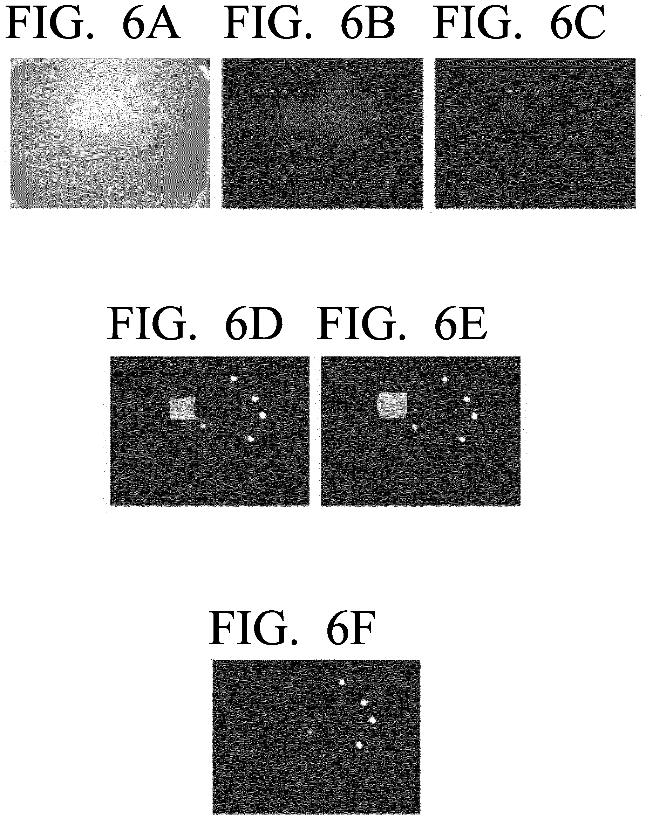

The input unit 305 may receive an IR scan image. For example, the input unit 305 may receive an IR scan image with a 960*1080 resolution using a high-definition multimedia interface (HDMI) method. An example of an IR scan image including one or more areas touched by the user is shown in FIG. 6A.

The background removal filtering unit 310 may remove a background portion from an IR scan image. For example, the background removal filtering unit 310 may filter out an unnecessary background portion from the IR scan image received by the input unit 305. An example of an image obtained by filtering out a background portion from the IR scan image of FIG. 6A is shown in FIG. 6B. Referring to FIG. 6B, any unnecessary background portion may be removed from the IR scan image of FIG. 6A.

The high-pass filtering unit 320 may perform high-pass filtering on the background-removed IR scan image. For example, the high-pass filtering unit 320 may perform high-pass filtering on an IR scan image output by the background removal filtering unit 310. An example of an image obtained by performing high-pass filtering on the IR scan image of FIG. 6B is shown in FIG. 6C. Referring to FIG. 6C, noise that may be caused by a shadow may be removed from the IR scan image of FIG. 6B is shown in FIG. 6C by high-pass filtering.

The scaler filtering unit 330 may perform scaler filtering on a high-pass-filtered IR scan image. For example, the scaler filtering unit 330 may perform scaling filtering on an image output by the high-pass filtering unit 320. An example of an image obtained by performing scaler filtering on the IR scan image of FIG. 6C is shown in FIG. 6D. Referring to FIGS. 6C and 6D, the contrast between the areas touched by the user and their surroundings (i.e., the areas not touched by the user) may be improved by scaler filtering.

The rectification filtering unit 340 may perform rectification filtering on a scaler-filtered IR scan image. For example, the rectification filtering unit 340 may perform rectification filtering on an image output by the scaler filtering unit 330. An example of an image obtained by performing rectification filtering on the IR scan image of FIG. 6D is shown in FIG. 6E. Referring to FIG. 6E, the areas touched by the user may appear distinctively in a particular pattern. That is, each area touched by the user has a defined shape and size that is distinctive to a particular pattern that can be detected and analyzed by the pattern filtering unit 350.

The pattern filtering unit 350 may remove a predefined touch pattern from a rectification-filtered IR scan image. For example, assume that the user generally makes touches with fingers, that a touch pattern formed by the fingers generally has a circular shape with a predefined size, or a size that is within a predefined range that is defined by a minimum size and a maximum size, and that an unintentional touch pattern made by the user (for example, a touch pattern made by the wrist or the palm of the hand) has a size larger than the predefined size or has a shape other than a circular shape (for example, a rectangular or diamond shape) or no particular shape. Intentional touch patterns and unintentional touch patterns and/or the characteristics thereof may be predefined and stored in a memory. In this example, the pattern filtering unit 350 may analyze the particular pattern of each touched area that has been extracted by the previous filtering operations and remove an unintentional touch pattern, such as a touch pattern having a size larger than the predefined size, a touch pattern having a shape other than a circular shape or the like, from the output image of the rectification filtering unit 340. The user may select more than one area by touching with one or more fingers. In this example, the selected areas may all be located within an area with a predefined size (for example, the size of the hand). That is, a touch pattern that is more than a predetermined distance apart from a touch pattern intentionally made by the user may be identified as an unintentional touch pattern. Accordingly, in response to there being multiple touch patterns, the pattern filtering unit 350 may remove a touch pattern that is more than the predefined distance apart from the rest of the touch patterns.

An example of an image obtained by performing pattern filtering on the IR scan image of FIG. 6E is shown in FIG. 6F. Referring to FIGS. 6E and 6F, an unintentional touch pattern (for example, a touch pattern made by the palm of the hand) may be removed by pattern filtering.

The extraction unit 360 may extract one or more areas touched by the user from a pattern-filtered IR scan image. For example, the extraction unit 360 may extract one or more areas touched by the user by determining the location of a touch pattern in an image output by the pattern filtering unit 350 (i.e., the location in the filtered scan image).

The extraction unit 360 may detect the movement of the extracted touch areas. For example, in response to the receipt of a plurality of IR scan images in series, the extraction unit 360 may sequentially extract one or more areas touched by the user from the plurality of IR scan images, and may detect the movement of the touched areas based on any variations in the locations of the touched areas.

The event sensing unit 370 may determine whether the movement of the extracted touched areas has a predefined pattern. For example, in response to the extracted touched areas being detected to have gradually moved to the right, the event sensing unit 370 may determine that a left-to-right movement of the extracted touched areas has been detected, and may generate an event command corresponding to the detected left-to-right movement. The operation of the event sensing unit 370 may be performed by the control unit 190.

The output unit 380 may transmit the extracted touched areas and the generated event to the control unit 190. For example, the output unit 380 may transmit the extracted touched areas to the control unit 190 by using a USB-based method.

The image processing unit 300 may also include a down-scaling unit (not shown), a conversion unit (not shown), and an encoding unit (not shown).

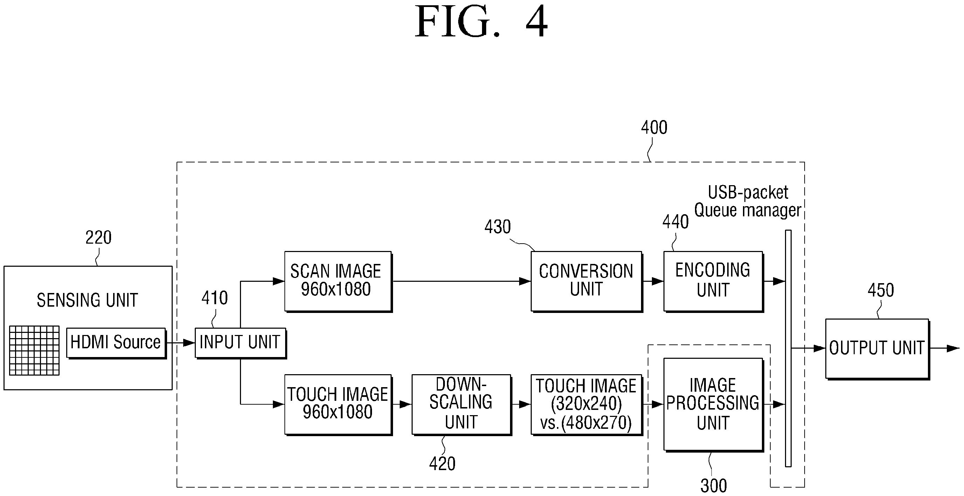

The image processing unit 300 is illustrated in FIGS. 1 to 3 as being an element of the display apparatus 100. In another example, the functions of the image processing unit 300 may be implemented as a separate device from the display apparatus 100. An example of a touch sensing apparatus that performs the functions of the image processing unit 300 will hereinafter be described with reference to FIG. 4.

FIG. 4 is a block diagram of a touch sensing apparatus according to an exemplary embodiment.

Referring to FIG. 4, a touch sensing apparatus 400 includes an input unit 410, a down-scaling unit 420, a conversion unit 430, an encoding unit 440, and an output unit 450.

The input unit 410 may receive an IR scan image. For example, the input unit 410 may receive a plurality of IR scan images having a resolution of 960*1080 and a frame rate of 60 fps in series. In this example, the received IR scan images have a resolution of 960*1080 and a frame rate of 60 fps, although it should be understood that the input unit 410 may receive a plurality of IR scan images having a resolution other than 960*1080 and a frame rate other than 60 fps.

The down-scaling unit 420 may perform down-scaling on the received IR scan images. For example, the down-scaling unit 420 may down-scale the resolution of the received IR scan images to 320*240 or 480*270. The down-scaling unit 420 may be provided to reduce the size of data that needs to be processed by the image processing unit 300. Thus, the down-scaling unit 420 may be optional in a case in which the image processing unit 300 has an operating speed fast enough to properly process the received IR scan images.

The image processing unit 300 may detect one or more areas touched by the user by removing a predefined pattern from the down-scaled IR scan images. The operation of the image processing unit 300 has already been described above with reference to FIG. 3, and thus, a detailed description thereof will be omitted.

The conversion unit 430 may convert the received IR scan images to a predefined frame rate. For example, the conversion unit 430 may convert the frame rate of the received IR scan images from about 60 fps to 5 fps. The conversion unit 430 may be provided to reduce the size of data that needs to be processed by the encoding unit 440. Thus, the conversion unit 430 may be optional in a case in which the encoding unit 440 has an operating speed fast enough to properly process the received IR scan images. The conversion unit 430 may convert the frame rate of the received IR scan images to various levels other than 5 fps.

The encoding unit 440 may encode the received IR scan images using a predefined compression method. For example, the encoding unit 440 may encode the frame rate-converted IR scan images provided by the conversion unit 430 using a Moving Picture Experts Group (MPEG) method.

The output unit 450 may transmit the detected touched areas and the encoded IR scan images to an external device (not shown). For example, the output unit 450 may transmit the detected touched areas and the encoded IR scan images to the external device by using a USB-based method.

The touch sensing apparatus 400 may remove an unintentional touch pattern from an IR scan image, and may thus improve the precision of touch sensing.

FIG. 5 is a diagram illustrating an example of the shape of the sensing unit 220.

Referring to FIG. 5, the sensing unit 220 includes an IR source unit 221 and an IR sensing unit 223.

The IR source unit 221 may emit IR light toward the surface of the display unit 210. For example, the IR source unit 221 may be disposed below the display unit 210, and may emit IR light toward the surface of the display unit 210.

The IR sensing unit 223 may generate an IR scan image by sensing IR light reflected in response to the user touching on the surface of the display unit 210. For example, the IR sensing unit 223 may generate an IR scan image based on IR light reflected in response to the user touching on the surface of the display unit 210 by using an array of a plurality of IR sensing elements.

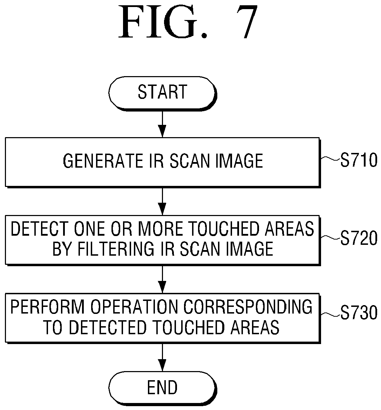

FIG. 7 is a flowchart illustrating a touch sensing method according to an exemplary embodiment.

Referring to FIG. 7, an IR scan image of the surface of a display unit may be generated (S710). For example, the IR scan image may be generated by emitting IR light toward the surface of the display unit and sensing reflected IR light in response to a user touching on the surface of the display unit.

One or more areas touched by the user may be detected by removing a predefined touch pattern from the generated IR image (S720). For example, the touched areas may be extracted from an image obtained by removing a background portion from the generated IR image, performing high-pass filtering on the background-removed IR image, performing scaler filtering on the high-pass-filtered IR image, performing rectification filtering on the scaler-filtered IR image, and removing a predefined touch pattern, such as a touch pattern having a size larger than a predefined size or a touch pattern not having a predefined shape (for example, a circular shape) from the rectification-filtered IR image.

An event corresponding to the detected touch areas may be processed (S730). For example, in response to the user touching and selecting a predetermined channel from a screen that displays a plurality of channels, an image corresponding to the predetermined channel may be displayed.

According to the example illustrated in FIG. 7, since a control command from the user can be received in a touch-based manner, it is possible for the user to intuitively control a display apparatus. In addition, it is possible to improve the precision of touch sensing by removing any unintentional touch patters made by the user. The touch sensing method illustrated in FIG. 7 may be performed by a display apparatus having the structure illustrated in FIG. 1 or another structure, or by a touch sensing apparatus having the structure illustrated in FIG. 4 or another structure.

The foregoing exemplary embodiments and advantages are merely exemplary and are not to be construed as limiting the inventive concept. The present teaching can be readily applied to other types of apparatuses. Also, the description of the exemplary embodiments is intended to be illustrative, and not to limit the scope of the claims, and many alternatives, modifications, and variations will be apparent to those skilled in the art.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A display apparatus comprising:
a display unit which displays an image;
a sensing unit which generates an infrared (IR) scan image of a surface of the display unit;
an image processing unit which detects touched areas that are touched by a user from the IR scan image, detects an unintentional touched area, from among the touched areas, that has an unintentional touch pattern, and removes the unintentional touched area from the IR scan image; and
a control unit which processes an event corresponding to a remaining touched area from among the touched areas.

2. The display apparatus of claim 1, wherein the sensing unit comprises:
an IR source unit which emits IR light toward the surface of the display unit; and
an IR sensing unit which generates the IR scan image by sensing the IR light reflected in response to the user touching the surface of the display unit.

3. The display apparatus of any one of claims 1 to 2, wherein the image processing unit identifies a touch pattern having a predefined shape or a touch pattern having irregular intervals between elements thereof as the unintentional touch pattern.

4. The display apparatus of any one of claims 1 to 3, further comprising:
a down-scaling unit which down-scales the IR scan image,
wherein the image processing unit detects the touched areas from the down-scaled IR scan image, detects the unintentional touched area, from among the touched areas, that has the unintentional touch pattern, and removes the unintentional touched area from the down-scaled IR scan image.

5. The display apparatus of any one of claims 1 to 4, wherein the image processing unit comprises:
a background removal filtering unit which removes a background portion from the IR scan image;
a high-pass filtering unit which performs high-pass filtering on the background-removed IR scan image;
a scaler filtering unit which performs scaler filtering on the high-pass-filtered IR scan image;
a rectification filtering unit which performs rectification filtering on the scaler-filtered IR scan image;
a pattern filtering unit which detects the unintentional touched area, from among the touched areas, that has the unintentional touch pattern from the rectification-filtered IR scan image, and removes the unintentional touched area from the rectification-filtered IR scan image; and
an extraction unit which extracts the remaining touched area from the pattern-removed IR scan image.

6. The display apparatus of claim 4 or 5, wherein the image processing unit comprises:
an input unit which receives the IR scan image using a high-definition multimedia interface (HDMI) communication method; and
an output unit which outputs the touched areas to the control unit using a universal serial bus (USB)-based method.

7. The display apparatus of claim 6, wherein the image processing unit further comprises an output unit which outputs the touched areas to the control unit using a universal serial bus (USB)-based method.

8. The display apparatus of claim 6, wherein the sensing unit generates a plurality of IR scan images of the surface of the display unit in series at a predefined frame rate, the image processing unit further comprises an encoding unit which encodes the plurality of IR scan images using a predefined compression method, and the output unit transmits the encoded IR scan images to the control unit.

9. The display apparatus of claim 8, wherein the image processing unit further comprises a conversion unit which converts the plurality of IR scan images to a predefined frame rate, and the encoding unit encodes the frame rate-converted IR scan images using the predefined compression method.

10. A touch sensing method comprising:
generating an IR scan image of a surface of a display unit;
detecting touched areas that are touched by a user from the IR scan image;
detecting an unintentional touched area, from among the touched areas, that has an unintentional touch pattern;
removing the unintentional touched area from the IR scan image; and
processing an event corresponding to a remaining touched area from among the touched areas.

11. The touch sensing method of claim 10, wherein the generating the IR scan image comprises:
emitting IR light toward the surface of the display unit; and
generating the IR scan image by sensing IR light reflected in response to the user touching on the surface of the display unit.

12. The touch sensing method of any one of claims 10 to 11, wherein the detecting comprises detecting the touched areas by removing a touch pattern having a predefined shape and/or a touch pattern having irregular intervals between elements thereof from the IR scan image.

13. The touch sensing method of any one of claims 10 to 12, wherein the detecting comprises:
removing a background portion from the IR scan image;
performing high-pass filtering on the background-removed IR scan image;
performing scaler filtering on the high-pass-filtered IR scan image;
performing rectification filtering on the scaler-filtered IR scan image;
removing the unintentional touched area from the rectification-filtered IR scan image; and
extracting the remaining touched area from the pattern-removed IR scan image.

14. The touch sensing method of claim 10, further comprising:
down-scaling the IR scan image;
detecting the touched areas from the down-scaled IR scan image;
detecting the unintentional touched area from among the touched areas that has the unintentional touch pattern; and
removing the unintentional touched area from the down-scaled IR scan image.

15. The touch sensing method of any one of claims 10 to 14, wherein the generating the IR scan image comprises generating a plurality of IR scan images of the surface of the display unit in series at a predefined frame rate, and the touch sensing method further comprises:
encoding the plurality of IR scan images using a predefined compression method; and
outputting the encoded IR scan images.
